# EUROPEAN PATENT SPECIFICATION

(11) **EP 2 169 987 B1**
(45) Date of publication and mention of the grant of the patent: **05.08.2015**
(21) Application number: 09704937.3
(22) Date of filing: 04.06.2009
(51) Int. Cl.: H04W 4/14, H04W 88/18, H04L 12/58

(54) **METHOD, SYSTEM AND DEVICE FOR IMPLEMENTING SHORT MESSAGING AMONG ENTERPRISES**
VERFAHREN, SYSTEM UND VORRICHTUNG ZUR IMPLEMENTIERUNG VON KURZNACHRICHTEN ZWISCHEN UNTERNEHMEN
PROCÉDÉ, SYSTÈME ET DISPOSITIF DE MISE EN OEUVRE DE MESSAGES COURTS ENTRE ENTREPRISES

(30) Priority: 21.07.2008 CN 200810132171
(43) Date of publication of application: 31.03.2010
(73) Proprietor: Huawei Technologies Co., Ltd., Longgang District Shenzhen, Guangdong 518129 (CN)
(72) Inventor: SONG, Liyan, Shenzhen Guangdong 518129 (CN); MA, Haibin, Shenzhen Guangdong 518129 (CN)
(74) Representative: Thun, Clemens
(86) International application number: PCT/CN2009/072135
(87) International publication number: WO 2010/009642

(56) References cited:
- CN-A- 1 581 907
- CN-A- 1 863 249
- CN-A- 101 309 458
- US-A1- 2004 244 102
- US-A1- 2005 078 660
- US-A1- 2005 266 864
- US-A1- 2006 148 495
- US-A1- 2007 233 795
- US-A1- 2008 004 049
- US-A1- 2009 138 563

## Description

### CROSS-REFERENCE TO RELATED APPLICATIONS

The application claims the priority of Chinese patent application No. 200810132171.4, entitled "Method, System and Apparatus for Implementing Short-Messaging between Multiple Enterprises" and filed with the SIPO on July 21, 2008.

### FIELD OF THE INVENTION

The present invention relates to the field of communication technique, and particularly to a method, system and apparatus for implementing short-messaging between multiple enterprises.

### BACKGROUND OF THE INVENTION

With the development of communication industry, short-messaging has become one of the most widely applied communication means at present, with the advantages of low price, clear expression, and high delivery ratio, and hence is deeply welcomed by users.

At the same time, applications of short-messaging in enterprises are also booming, from the earliest enterprise information machine to the currently popular Mobile Agent Server (MAS) are all enterprise short-messaging systems customized by the operators for the enterprises. The MAS provides general platform interface modes to rapidly and flexibly integrate or incorporate with existing office and application systems, perform a sending-receiving bidirectional transmission and interactive transmission of messages by using the mobile data service as a medium, so as to meet the enterprise office requirement of informationization, personalization and mobilization. This has become a mainstream way of enterprise short-messaging.

In the current enterprise short-messaging schemes, the operator deploys short-messaging (SM) servers inside enterprises, and the SM servers are connected to the short-messaging gateway

(SM GW) of the operator through special lines or the Internet. The gateway respectively allocates a corresponding SM service access code for the SM server of each enterprise, through which the SM server of each enterprise sends short messages to the SM GW, and provides the enterprise with a web interface for sending short messages, so that the enterprise can group message to the users through the web interface.

During the process of implementing the technical solution, the inventor finds that the mode for implementing the prior art has the following problems: in the current enterprise short-messaging scheme, in order to distinguish SM servers of different enterprises, each enterprise shall be allocated with an independent SM access code, and this wastes code resources.

A US application (US 2004/244102) discloses a method for handling text message messages within a text messaging system. The message being intended for a recipient, and the text message including means for uniquely identifying the provider of a text message service, the method including the steps of identifying the text message service provider from the text message, determining one or more message handlers provided in the system. Associated with the service provider, and forwarding the text message to one or more appropriate destinations in accordance with the determined message handlers.

A US application (US 2005/078660) discloses a system and method for routing at least one message to a component connected to a telecommunications network. The message is received from the telecommunications network over a telecommunications communication protocol link. Interaction with the message occurs at the MAP layer, or at another equivalent high level protocol layer, to determine at least one piece of information, including information indicative of the destination, from the message A route is then selected to deliver the message to its destination, which is connected to the telecommunications network. The route being selected from at least a first route via the telecommunications network and a second route via a network separate to the telecommunications network and the route further being selected based on the information determined from the message.

A US application (US 2006/148495) discloses that a text message is identified by an SMS router by means of message attributes, such as addressing, address type, message content or signalling fields, as belonging to one of a number of different categories, each category relating to a specific messaging application. The identified messaging application may be executed by a message transformation means which may parse, interpret and transform the message content and addressing in order to generate a response message. The response message may be generated according to a programmable table of exceptions, the exceptions conforming to a syntax permitting matching of a single exception to multiple forms of message construction. The message transformation means and SMS router may return the response message without requiring a routing query to an HLR, the response message addressing and routing information being instead derived from the original message.

A US application (US 2007/233795) discloses a method and system for identifying a reply message using a relatively limited number of message source identifiers. In an exemplary embodiment, a message is sent with a source device to one or more target mobile devices on one or more wireless carriers. A gateway assigns one of a limited number of long codes to the message for each wireless carrier. Each long code identifies the gateway as a return address for the message. The gateway also stores the message in a virtual inbox for each target mobile device. When a target mobile device sends a second message to the long code, the gateway examines the associated inbox for a message assigned the same long code. If the gateway finds a matching message, the gateway interprets the second message received from the target mobile device as a reply to the first message.

### BRIEF SUMMARY OF THE INVENTION

The embodiments of the present invention provide a method, system and apparatus for implementing short-messaging between multiple enterprises, which are used to implement mutual messaging between enterprises, and save the number resources.

An embodiment of the present invention provides a method for implementing short-messaging between multiple enterprises, including: receiving, by an SM server of the enterprise to which a sender belongs, a short message sent by the sender to a receiver's number; and adding, by the SM server, a uniform SM access code anterior to the sender's number in the short message, and sending, by the SM server, the short message having the uniform SM access code to an SM GW, so as to send the short message to a mobile terminal corresponding to the receiver's number; sending, by the SM server, the short message to a PC client corresponding to the receiver's number; wherein the method further comprising:
receiving, by the SM GW, a short message sent by the mobile terminal to the number of the sender, the uniform SM access code being carried anterior to the number of the sender in the short message;
sending, by the SM GW, the short message to the message distribution server; and
eliminating the uniform SM access code and then sending the short message to the SM server to which the PC client corresponding to the number of the sender belongs, by the message distribution server;
characterized in that the step of sending, by the SM server, the short message to the PC client corresponding to the receiver's number comprises:judging(502, 603), by the SM server, whether the SM server is in charge of the SM service of the receiver's number;if the result of the judgment is "Yes", sending(502), by the SM server, the short message to the PC client corresponding to the receiver's number, otherwise forwarding (603), by the SM server, the short message to a message distribution server, so that the message distribution server sends the short message to the PC client corresponding to the receiver's number.

Compared with the prior art, the embodiments of the present invention have the following advantages: by means of adding an uniform SM access code to the sender's number through an SM server, SM servers of different enterprises no longer need to be distinguished with the SM access code, so the number resources are saved.

### BRIEF DESCRIPTION OF THE DRAWINGS

Fig. 1 is a flow chart of a method for implementing short-messaging between multiple enterprises according to an embodiment of the present invention;
Fig. 2 is a schematic diagram of networking applied in an embodiment of the invention;
Fig. 3A is a schematic diagram of networking in which a user of enterprise A sends a short message to a mobile terminal through a user terminal A according to an embodiment of the present invention;
Fig. 3B is a flow chart in which a user of enterprise A sends a short message to a mobile terminal through a user terminal A according to an embodiment of the present invention;
Fig. 4A is a schematic diagram of networking in which a mobile terminal sends a short message to a user terminal A in enterprise A according to an embodiment of the present invention;
Fig. 4B is a schematic diagram of networking in which a mobile terminal sends a short message to a user terminal A in enterprise A according to an embodiment of the present invention;
Fig. 5A is a schematic diagram of networking in which a user terminal A sends a short message to a user terminal B in enterprise A according to an embodiment of the present invention;
Fig. 5B is a flow chart in which a user terminal A sends a short message to a user terminal B in enterprise A according to an embodiment of the present invention;
Fig. 6A is a schematic diagram of networking in which a user terminal A in enterprise A sends a short message to a user terminal C in enterprise B according to an embodiment of the present invention;
Fig. 6B is a flow chart in which a user terminal A in enterprise A sends a short message to a user terminal C in enterprise B according to an embodiment of the invention;
Fig. 7 is a schematic diagram of a system for implementing short-messaging between multiple enterprises according to an embodiment of the present invention;
Fig. 8 is a configure diagram of an SM server according to an embodiment of the present invention; and
Fig. 9 is a configure diagram of an SM server according to an embodiment of the present invention.

### DETAILED DESCRIPTION OF THE INVENTION

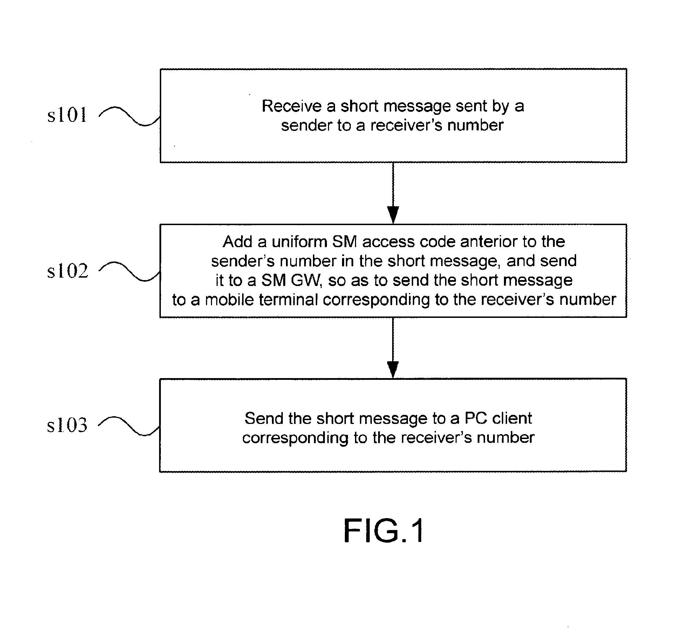

An embodiment of the present invention provides a method for implementing short-messaging between multiple enterprises, which is used for message distribution in a network, as shown in Fig. 1. The method is described as follows.

At step s101, a short message sent by a sender to a receiver's number is received by a SM server.

At step s102, the short message is added with a uniform SM access code anterior to the SM sender's number in the short message by the SM server, and the short message having the uniform SM access code is sent to an SM GW, so as to be sent to a mobile terminal corresponding to the receiver's number.

At step s103, the short message is sent to a PC client corresponding to the receiver's number by the SM server.

In the embodiment of the present invention, since an uniform SM access code is added anterior to the sender's number by the SM server, SM servers of different enterprises no longer need to be distinguished with SM access codes, and thus the number resources are saved.

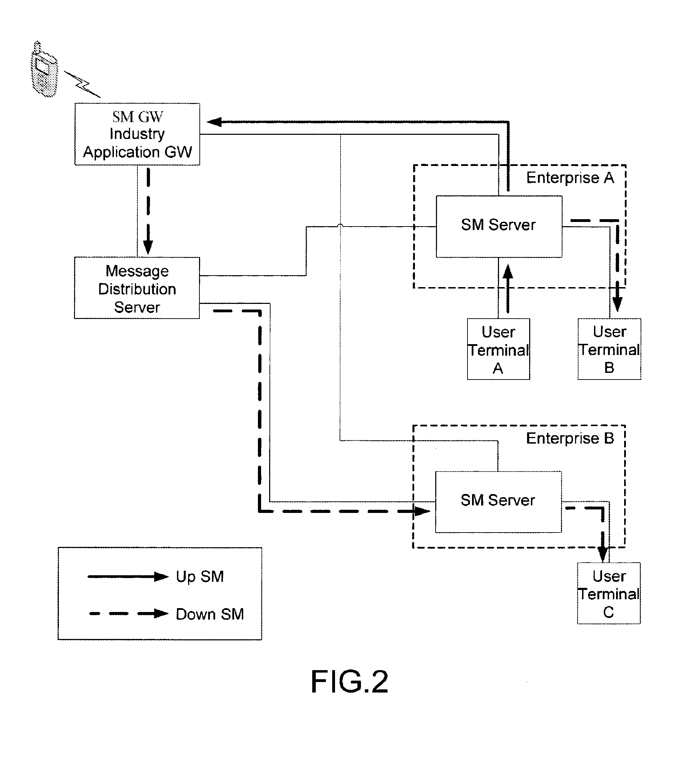

The method for implementing short-messaging between multiple enterprises of the present invention is described with reference to a concrete application scenario, as shown in Fig. 2. It is assumed that there are two enterprise users with their respective SM servers under the industry application gateway SM GW of a network. The embodiment of the present invention differs from the prior art as follows: deploying a message distribution server in the network to judge which SM server the receiver belongs to, and forwarding short messages. Various short-messaging scenarios are described in reference to the architecture of the network.

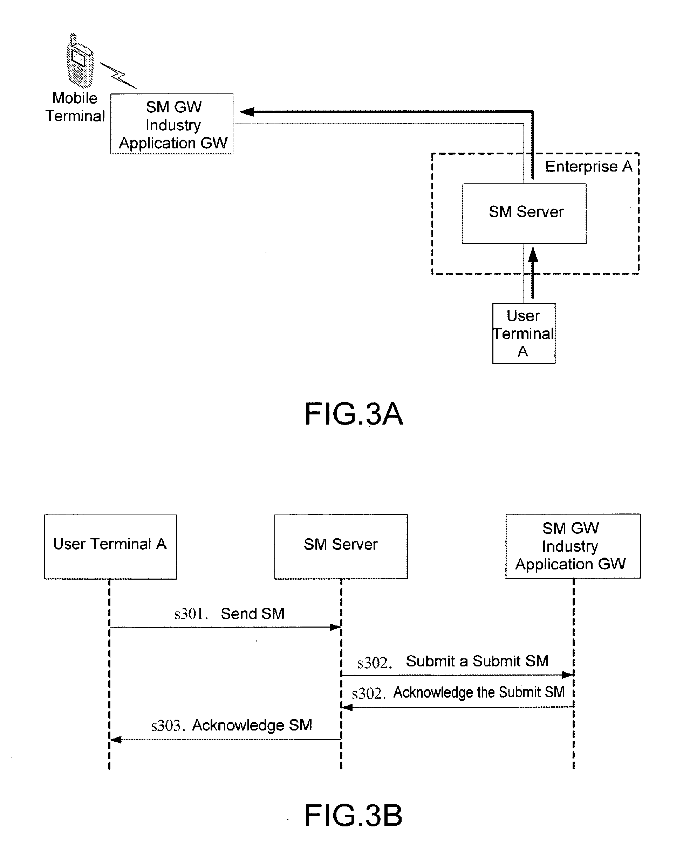

Particularly, in an application scenario of the embodiment of the invention, a user of enterprise A sends a short message to a mobile terminal through a user terminal A (a PC client), i.e., a short-messaging flow of PC-to-Phone is shown. The schematic diagram of networking of the scenario is shown in Fig. 3A, and the short-messaging flow of is shown in Fig. 3B, and is described as follows.

At step s301, the user terminal A sends a short message to an SM server.

Particularly, the user terminal A can send a short message by calling a short-messaging interface supplied by the SM server.

At step s302, the SM server sends the short message to an industry application GW, i.e., SM GW with a "Submit" message, and receives the short message acknowledgement sent by the industry application GW.

Particularly, the SM server adds an SM access code anterior to the sender's number in the short message, calls the short-messaging interface supplied by the industry application GW, sends the short message to the industry application GW based on a protocol such as China Mobile Peer to Peer (CMPP), Short Message Peer to Peer (SMPP), etc. with the sender's number added with the uniform SM access code carried in the short message, for the usage by the receiver when replying the short message.

At step s303, upon receiving the short message acknowledgement from the industry application GW, the SM server sends the acknowledgement to the user terminal A.

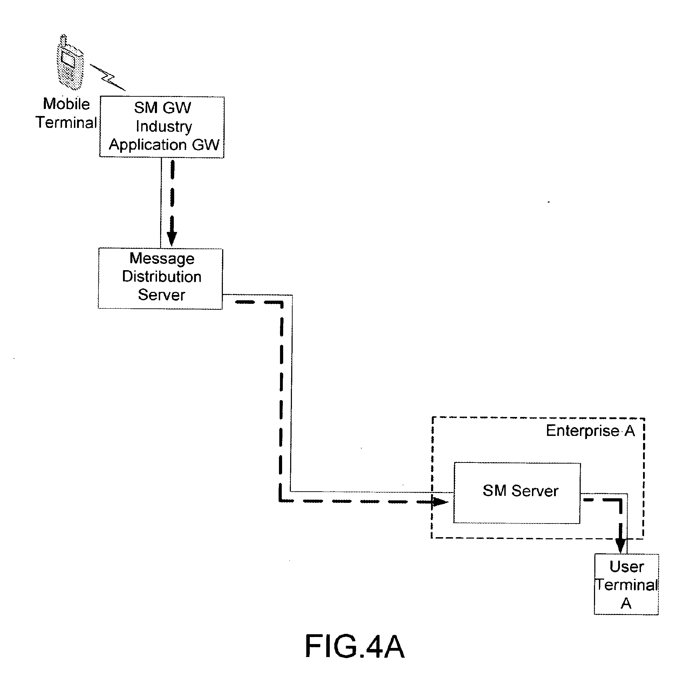

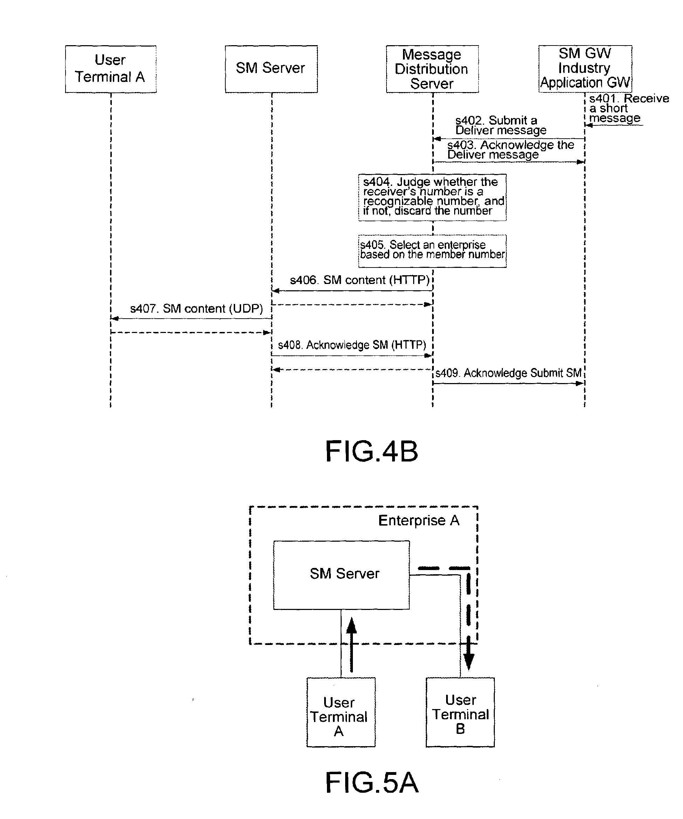

In another application scenario of the embodiment of the present invention, a mobile terminal sends a short message to the user terminal A in enterprise A, and the user terminal A in enterprise A receives the short message, i.e., a short-messaging flow of Phone-to- PC, namely, a flow that the PC receives short messages from the Phone, is shown. The schematic diagram of networking of the scenario is shown in Fig. 4A, and the flow that the user terminal A receives short messages, as shown in Fig. 4B, is described as follows.

At step s401, the industry application GW receives the short message sent by the mobile terminal.

Particularly, upon adding the uniform SM access code anterior to the receiver's number registered with the same Phone and PC number in the short message, the mobile terminal sends the short message having the uniform SM access code to the industry application GW.

At step s402, the industry application GW submits the message to the message distribution server.

Particularly, upon receiving the short message, the industry application GW submits the content of the short message to the message distribution server through a protocol such as CMPP or SMPP.

At step s403, the message distribution server sends a message acknowledgement to the industry application GW.

At step s404, the message distribution server judges whether the receiver's number is a recognizable number or not, and if not, discards the number. Particularly, in the embodiment, the message distribution server judges whether the receiver's number is a system receivable number or not, and if not, discards the number.

At step s405, the message distribution server eliminates the SM access code anterior to the receiver's number, and then judges which enterprise the receiver belongs to, and the enterprise can be selected based on the preset correspondence between enterprises and member numbers of the enterprise.

At step s406, the message distribution server sends the short message in the form of HTTP to the SM server of the enterprise to which the user terminal A belongs.

At step s407, the SM server sends the short message to the user terminal A through a User Datagram Protocol (UDP) message, and if the user terminal A is not online, the short message is stored as an offline short message.

At step s408, the SM server sends the SM acknowledgement to the message distribution server in the form of HTTP.

At step s409, the message distribution server sends the SM acknowledgement to the industry application GW.

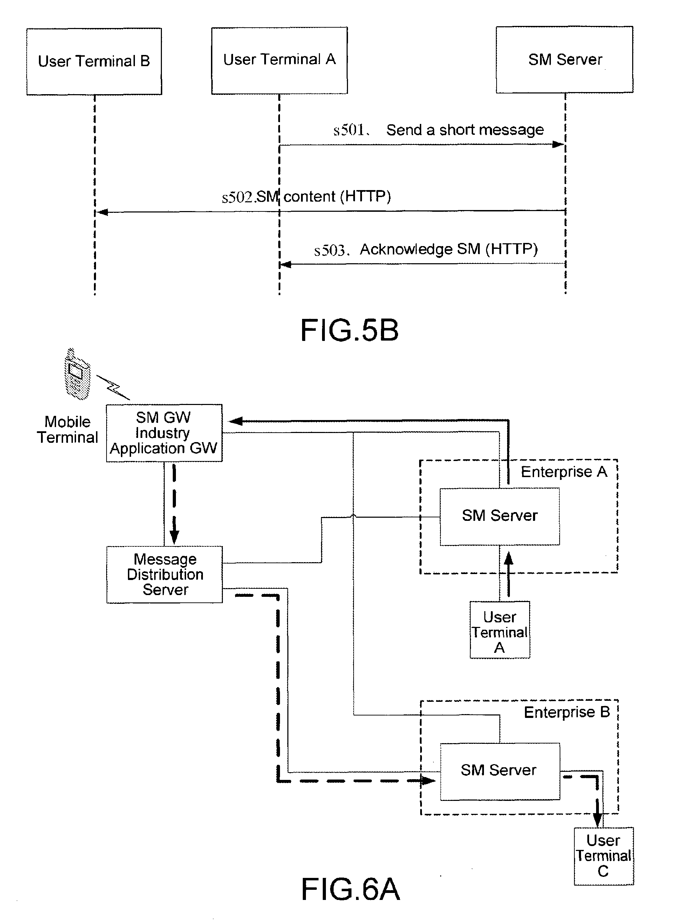

In another application scenario of the embodiment of the present invention, a user terminal A (PC client) in enterprise A sends a short message to a user terminal B (PC client), i.e., a short-messaging flow of PC-to-PC inside the same enterprise is shown. The schematic diagram of the networking of the scenario is shown in Fig. 5A, and the short-messaging flow of the user terminal A, as shown in Fig. 5B, is described as follows.

At step s501, the user terminal A firstly sends a short message, which is addressed to the user terminal B, to the SM server.

At step s502, the SM server accesses the database of the enterprise to judge that the receiver is the user terminal B of the enterprise, and sends the content of the short message to the user terminal B through the HTTP.

In addition, the SM server also sends the short message to the Industry Application GW, and then the Industry Application GW sends the short message to the mobile terminal of the receiver. This step is not marked, and it corresponds to PC-to-Phone short messaging.

AT step s503, the SM server sends the SM acknowledgement to the user terminal A through the HTTP.

The whole process as mentioned above only needs to be performed inside the network of the enterprise.

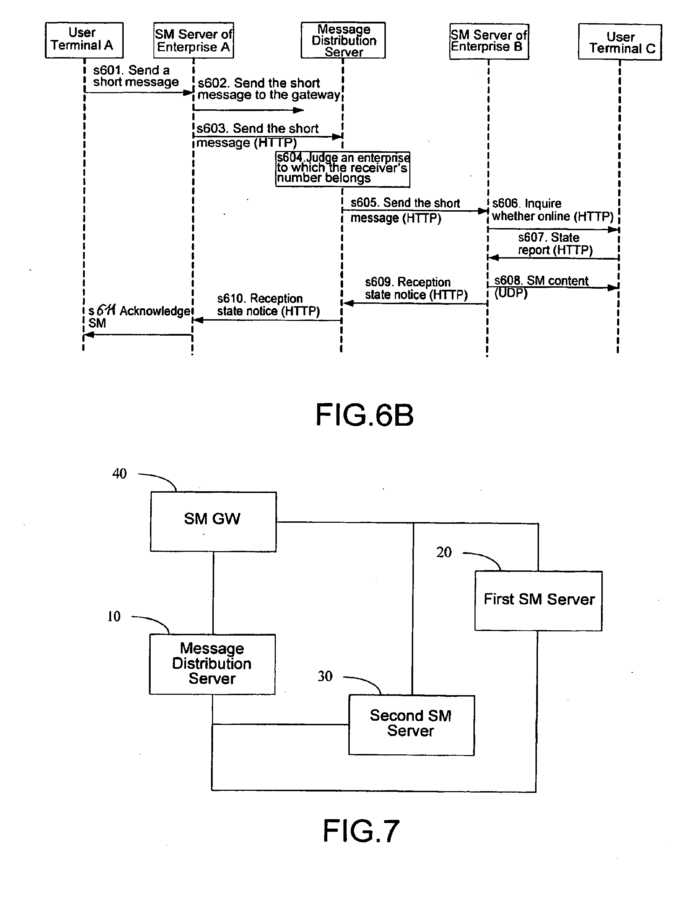

In another application scenario of the embodiment of the present invention, a user terminal A (PC client) in enterprise A sends a short message to a user terminal C (PC client) in enterprise B, i.e., a short-messaging flow of PC-to-PC between enterprises is shown. The schematic diagram of networking of the scenario is shown in Fig. 6A, and the short-messaging flow of the user terminal A, as shown in Fig. 6B, is described as follows.

At step s601, the user terminal A in enterprise A firstly sends a short message, which is addressed to the user terminal C in enterprise B, to the SM server in enterprise A.

At step s602, the SM server in enterprise A adds an SM access code anterior to the receiver's number in the short message, and forwards the short message having the SM access code to the industry application GW, so as to send the short message to the mobile terminal of the receiver. With respect to this flow, please see the short-messaging flow of PC-to-Phone as described in Figs. 3A and 3B for reference, and the description thereof is omitted herein.

At step s603, when the SM server of enterprise A judges that the receiver does not belong to enterprise A, the SM server of enterprise A forwards the short message to the message distribution server through the HTTP.

At step s604, the message distribution server determines which enterprise the receiver's number belongs to, and in this application scenario, the result of the determination is enterprise B.

At step s605, the message distribution server forwards the short message to the SM server of enterprise B.

At step s606, the SM server of enterprise B inquires through the HTTP whether the receiver, i.e., the user terminal C is online.

At step s607, the SM server of enterprise B obtains a state report of the user terminal C.

At step s608, the SM server of enterprise B sends the content of the short message to the user terminal C through the UDP. To be noted, if the user terminal C is not online, the SM server of enterprise B stores the offline short message, and sends the message to the user terminal C when the user terminal C is online.

At step s609, the SM server of enterprise B sends a reception state notice to the message distribution server through the HTTP.

At step s610, the message distribution server sends the reception state notice to the SM server of enterprise A through the HTTP.

At step s611, the SM server of enterprise A sends an SM acknowledgement to the user terminal A.

In the above method provided by the embodiments of the invention, by means of adding an uniform SM access code to the sender's number by an SM server, the SM servers of different enterprises no longer need to be distinguished with the SM access code, so that the uniform SM access code can be used for the whole short-messaging service , the SM sending and replying function of enterprise level is realized, and the demand of personal SM service is satisfied, thereby saving the number resources. In addition, the embodiments of the invention enables the same number for both the PC client and the mobile terminal, supports direct reply of short message, and enables the PC client and the mobile terminal to receive the short message simultaneously.

The embodiment of the present invention further provides a system for implementing short-messaging between multiple enterprises, as shown in Fig. 7, including: a message distribution server 10, at least two SM servers (the following description takes examples of a first SM server 20 and a second SM server 30), and an SM GW 40. The components are described as follows.

The first SM server 20 is adapted to, upon receiving a short message sent by the sender to the receiver's number, add an uniform SM access code anterior to the sender's number in the short message and send the short message having the uniform SM access code to the SM GW 40, so as to send the short message to a mobile terminal corresponding to the receiver's number; and send the short message to a PC client corresponding to the receiver's number.

The message distribution server 10 is adapted to receive the short message sent by the first SM server 20, when the second SM server 30 is in charge of the SM service of the receiver's number, and send the short message to the PC client corresponding to the receiver's number through the second SM server 30.

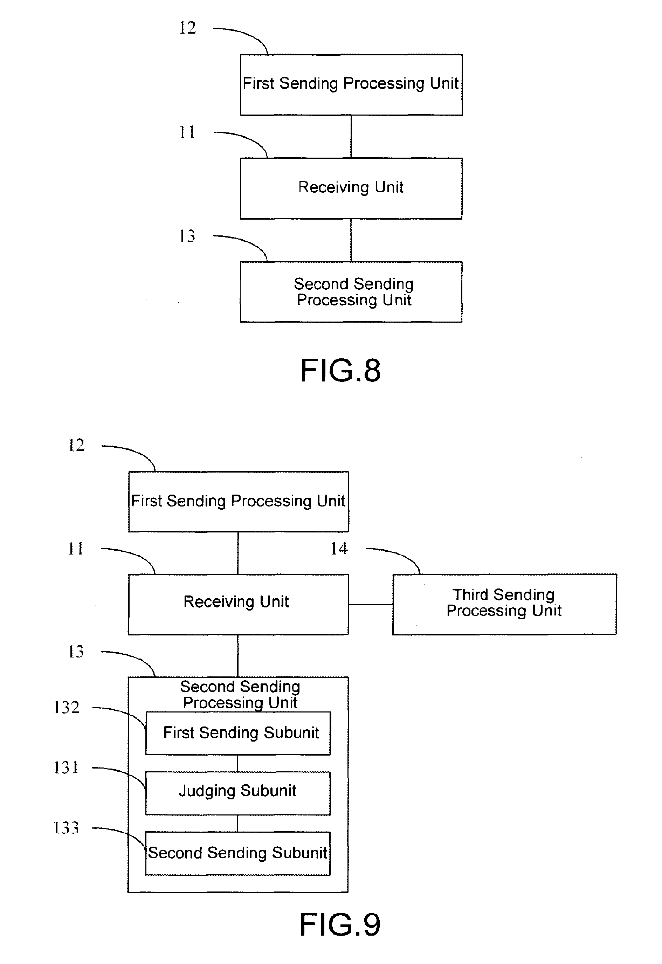

In the embodiment of the present invention, a configuration of the SM server is shown in Fig. 8, including:
a receiving unit 11 adapted to receive a short message sent by the sender to the receiver's number;
a first sending processing unit 12 adapted to add an uniform SM access code anterior to the sender's number in the short message and send the short message having the uniform SM access code to the SM GW, so as to send the short message to a mobile terminal corresponding to the receiver's number; and
a second sending processing unit 13 adapted to send the short message to a PC client corresponding to the receiver's number.

In another embodiment of the present invention, a configuration of the SM server is shown in Fig. 9, in which:
the second sending processing unit 13 of the SM server includes:
   a judging subunit 131 adapted to judge whether the second sending processing unit 13 is in charge of the SM service of the receiver's number;
   a first sending subunit 132 adapted to send the short message to the PC client corresponding to the receiver's number, when the result of the judgment by the judging subunit 131 is "Yes";
   a second sending subunit 133 adapted to forward the short message to the message distribution server when the result of the judgment by the judging subunit 131 is "No", and then the message distribution server sends the short message to the PC client corresponding to the receiver's number.

In the SM server, the receiving unit 11 is further adapted to receive a short message carrying a second receiver's number sent by the message distribution server. The SM server further includes:
a third sending processing unit 14 adapted to send the short message received by the receiving unit 11 to a PC client corresponding to the second receiver's number of which the apparatus is in charge.

In the above system and apparatus provided by the embodiment of the invention, by means of adding an uniform SM access code to the sender's number by an SM server, the SM servers of different enterprises no longer need to be distinguished with the SM access code, so that the uniform SM access code can be used for the whole short-messaging service, the SM sending and replying function of enterprise level is realized, and the demand of personal SM service is satisfied, thereby saving the number resources. In addition, the embodiment of the invention enables the same number for both the PC client and the mobile terminal, supports direct reply of short message, and enables the PC client and the mobile terminal to receive the short message simultaneously.

With the above descriptions, persons skilled in the art can clearly know that the present invention can be implemented by means of software and necessary general hardware platform, and also can be implemented by means of hardware, but in many conditions, the previous is the better mode. With this understanding, the technical solution of the invention substantively, or in other words, its contribution to the prior art, can be embodied in the form of software product. The computer software product is stored in a storage medium, including several instructions for enabling an apparatus to perform the method of the embodiments of the present invention.

Only a few examples of the invention are described above, and the invention is not limited thereby, and any change conceivable by persons skilled in the art will be within the protection scope of the invention as defined in the appended claims.

## Claims

1. A method for implementing short-messaging between multiple enterprises, comprising:
receiving (601), by a short messaging, SM, server of the enterprise to which a sender belongs, a short message sent by the sender to a receiver's number;
adding (602), by the SM server, an uniform short messaging, SM, access code anterior to number of the sender in the short message, and sending, by the SM server, the short message having the uniform SM access code to a short message gateway, SM GW, so as to send the short message to a mobile terminal corresponding to the receiver's number;
sending (603), by the SM server, the short message to a PC client corresponding to the receiver's number; wherein the method further comprising:
receiving (401), by the SM GW, a short message sent by the mobile terminal to the number of the sender, the uniform SM access code being carried anterior to the number of the sender in the short message;
sending (402), by the SM GW, the short message to a message distribution server; and
eliminating (405) the uniform SM access code and then sending (406) the short message to the SM server to which the PC client corresponding to the number of the sender belongs, by the message distribution server;
**characterized in that** the step of sending, by the SM server, the short message to the PC client corresponding to the receiver's number comprises:
judging (502, 603), by the SM server, whether the SM server is in charge of the SM service of the receiver's number;
if the result of the judgment is "Yes", sending (502), by the SM server, the short message to the PC client corresponding to the receiver's number, otherwise forwarding (603), by the SM server, the short message to a message distribution server, so that the message distribution server sends the short message to the PC client corresponding to the receiver's number.

2. The method according to claim 1, wherein the step of sending, by the message distribution server, the short message to the PC client corresponding to the receiver's number comprises:
acquiring, by the message distribution server, an SM server to which the PC client corresponding to the receiver's number belongs; and
sending, by the message distribution server, the short message to the PC client corresponding to the receiver's number through the SM server.

## Patentansprüche

1. Verfahren zur Implementierung von Kurznachrichten zwischen mehreren Unternehmen, umfassend:
Empfangen (601), durch einen Kurznachrichten (Short Messaging, SM) -Server des Unternehmens, zu dem ein Absender gehört, einer vom Absender an eine Empfängernummer gesendeten Kurznachricht;
Einfügen (602), durch den SM-Server, eines einheitlichen Kurznachrichten (SM) -Zugangscodes vor der Nummer des Absenders in die Kurznachricht und Senden, durch den SM-Server, der Kurznachricht mit dem einheitlichen SM-Zugangscode an einen Kurznachrichten-Netzübergang (Short Message Gateway, SM GW), um die Kurznachricht an ein mobiles Endgerät zu senden, das der Empfängernummer entspricht;
Senden (603), durch den SM-Server, der Kurznachricht an einen PC-Client, der der Empfängernummer entspricht; wobei das Verfahren ferner umfasst:
Empfangen (401), durch den SM GW, einer von dem mobilen Endgerät an die Nummer des Absenders gesendeten Kurznachricht, wobei der einheitliche SM-Zugangscode vor der Nummer des Absenders in der Kurznachricht übermittelt wird;
Senden (402), durch den SM GW, der Kurznachricht an einen Nachrichtenverteilserver; und
Entfernen (405) des einheitlichen SM-Zugangscodes und anschließend Senden (406) der Kurznachricht an den SM-Server, zu dem der PC-Client, der der Nummer des Absenders entspricht, gehört, durch den Nachrichtenverteilserver;
**dadurch gekennzeichnet, dass** der Schritt des Sendens, durch den SM-Server, der Kurznachricht an den PC-Client, der der Empfängernummer entspricht, umfasst:
Beurteilen (502, 603), durch den SM-Server, ob der SM-Server für den SM-Dienst der Empfängernummer zuständig ist;
falls das Beurteilungsergebnis "Ja" lautet, Senden (502), durch den SM-Server, der Kurznachricht an den PC-Client, der der Empfängernummer entspricht, andernfalls Weiterleiten (603), durch den SM-Server, der Kurznachricht an einen Nachrichtenverteilserver, so dass der Nachrichtenverteilserver die Kurznachricht an den PC-Client sendet, der der Empfängernummer entspricht.

2. Verfahren gemäß Anspruch 1, wobei der Schritt des Sendens, durch den Nachrichtenverteilserver, der Kurznachricht an den PC-Client, der der Empfängernummer entspricht, umfasst:
Erhalten, durch den Nachrichtenverteilserver, eines SM-Servers, zu dem der PC-Client gehört, der der Empfängernummer entspricht; und
Senden, durch den Nachrichtenverteilserver, der Kurznachricht an den PC-Client, der der Empfängernummer entspricht, über den SM-Server.

## Revendications

1. Procédé de mise en oeuvre de messages courts entre des entreprises multiples, comportant les étapes consistant à :
faire recevoir (601) par un serveur de messages courts, SM, de l'entreprise à laquelle appartient un expéditeur, un message court envoyé par l'expéditeur au numéro d'un destinataire ;
faire ajouter (602) par le serveur de SM un code d'accès uniforme de messages courts, SM, antérieur au numéro de l'expéditeur dans le message court, et faire envoyer, par le serveur de SM, le message court doté du code d'accès uniforme de SM à une passerelle de messages courts, SM GW, de façon à envoyer le message court à un terminal mobile correspondant au numéro du destinataire ;
faire envoyer (603) par le serveur de SM le message court à un client sur PC correspondant au numéro du destinataire ; le procédé comportant en outre les étapes consistant à :
faire recevoir (401) par la SM GW un message court envoyé par le terminal mobile au numéro de l'expéditeur, le code d'accès uniforme de SM étant transporté en position antérieure au numéro de l'expéditeur dans le message court ;
faire envoyer (402) par la SM GW le message court à un serveur de distribution de messages ; et
éliminer (405) le code d'accès uniforme de SM puis envoyer (406) le message court au serveur de SM auquel appartient le client sur PC correspondant au numéro de l'expéditeur, par le serveur de distribution de messages ;
**caractérisé en ce que** l'étape d'envoi par le serveur de SM du message court au client sur PC correspondant au numéro du destinataire comporte les étapes consistant à:
faire juger (502, 603) par le serveur de SM si le serveur de SM est chargé du service de SM du numéro du destinataire ;
si le résultat du jugement est "Oui", faire envoyer (502) par le serveur de SM le message court au client sur PC correspondant au numéro du destinataire, dans le cas contraire, faire transmettre (603) par le serveur de SM le message court à un serveur de distribution de messages, de telle sorte que le serveur de distribution de messages envoie le message court au client sur PC correspondant au numéro du destinataire.

2. Procédé selon la revendication 1, l'étape d'envoi par le serveur de distribution de messages du message court au client sur PC correspondant au numéro du destinataire comportant les étapes consistant à :
faire acquérir par le serveur de distribution de messages un serveur de SM auquel appartient le client sur PC correspondant au numéro du destinataire ; et
faire envoyer, par le serveur de distribution de messages, le message court au client sur PC correspondant au numéro du destinataire par l'intermédiaire du serveur de SM.
